# EUROPEAN PATENT APPLICATION

(11) **EP 2 489 509 A1**
(43) Date of publication of application: **22.08.2012**
(21) Application number: 12155605.4
(22) Date of filing: 15.02.2012
(51) Int. Cl.: B32B 27/30, B32B 27/32, B32B 27/34

(54) **Chemical Resistant Membrane**

(30) Priority: 17.02.2011 GB 201102803
(71) Applicant: Industrial Textiles & Plastics Limited, York YO61 3FA (GB)
(72) Inventor: Menage, Richard, York, YO61 3FA (GB)
(74) Representative: Hedley, Nicholas James Matthew

(57) **Abstract**

The present invention provides a flexible multi-layer ground membrane that comprises the following layers that are bonded together:
a) at least one layer of a polyolefin, e.g. a high density polyethylene, or a mixture including at least a majority by weight of polyolefin with a density greater than 0.9g/cm³, e.g. greater than 0.926 g/cm³
b) at least one layer formed of one or more polyamides or a mixture including at least a majority of such polyamide(s); and
c) at least one further layer formed of ethylene vinyl alcohol copolymer or a polymer including at least a majority by weight of ethylene vinyl alcohol copolymer, said layer c) optionally lying adjacent to polyamide layer b).

## Description

### Technical Field

The present invention relates to ground membranes (sometimes called "geomembranes"), which are membranes that are applied to ground and structures, including but not limited to liners for containment of solids, liquids, vapours and gas and contaminated land to isolate the ground and structures and prevent harmful materials from migrating out of them or into them. The harmful materials include polar and non-polar chemicals, especially liquids, vapours and gases, water, aqueous solutions of chemicals, petrochemicals and hydrocarbons.

Such membranes are used in many civil engineering, building foundation, ground engineering and environmental protection applications. The chemical resistance characteristics of a ground membrane vary depending upon the membrane's composition and membranes having different compositions are used for different purposes and a membrane suitable for one application may be unsuitable for others.

### Technical Background

Typically ground membranes applications may be summarised as follows:
1. Membranes for containment, waterproofing and tanking. Examples of containment applications include liners for water reservoirs, dams, canals, waste tips, sewage treatment, slurry tanks and industrial waste lagoons. "Waterproofing" prevents the ingress of moisture, vapours, water and aqueous liquids into the structure, be it through the foundation wall or ceiling. Damp poof membranes are generally used in foundations and tanking membranes for lining tunnels, underground structures and cellars.
2. Membranes for providing gas protection. Gas barrier membranes are installed wherever there is a risk of naturally occurring gases such as methane and carbon dioxide. Gas barriers often incorporate a layer of aluminium foil sandwiched between woven mesh reinforcement; the reinforcement is provided in order to prevent the foil tearing if the membrane is stretched.
3. Membranes for providing chemical resistance. Chemical resistant membranes are used for example on redevelopments of old industrial (brown-field) sites where there is a risk of petrochemical and toxic industrial chemical residues in the soil. These membranes are used for separation and containment and to prevent the ingress of hydrocarbons and industrial chemical residues form migrating into a new structure. They are also used for secondary containment applications around fuel tanks where the membrane material needs to be resistant to hydrocarbons and fuels.

Geomembrane materials are commonly homogeneous (made of one type of material), e.g. low-, medium- and high-density polyethylene (LDPE, MDPE, HDPE), polypropylene (PP), polyvinyl chloride (PVC), butyl rubber, chlorosulphonated polyethylene (CSPE/CPM), ethylene interpolymer alloy (EIA), or nitrile butadiene (NBR).

The chemical protection afforded by such geomembranes is limited to the type of membrane material used and membranes for blocking one type of contaminant material will not or may not provide a barrier for a different type of contaminant. Liquid contaminants can be characterised as polar or non-polar chemicals and membranes are generally resistant to one or the other, but not both. For example membranes made of HDPE are not particularly resistant to the migration of non-polar chemicals, e.g. hydrocarbons, and the membrane material PVC is not particularly resistant to the migration of polar chemicals, e.g. methanol.

There is a need for a ground protection membrane that is resistant to a wide spectrum of attack chemicals, including both polar and non-polar chemicals, and that is resistant to the migration of such chemicals.

US-5221570 discloses a multilayered co-extruded ground protection membrane consisting of outside layers consisting of high density polyethylene and a very low density polyethylene inner core layer. Such membranes are effective for preventing the passage of water and aqueous solutions and are less effective for containing non-polar liquids such as hydrocarbons.

US-4819374 discloses a method prolonging the effect of a fumigant applied to the soil by covering soil to which the fumigant has been applied with a film that is a laminate of a polyolefin and a relatively thinner polyamide.

Laminated films are well known for packaging foods, see for example US-6274246, US-4818592, US-6599639, EP-1607213, WO-2007/060086 and WO-95/33621. As an example, US-6599639 discloses food packaging made from a coextruded, retortable film having a core layer made of an ethylene/vinyl alcohol copolymer; two intermediate layers including a polyamide; two adhesive layers including a polymeric adhesive; and two outer layers including low density polyethylene, medium density polyethylene, high density polyethylene, ethylene/alpha olefin copolymer, propylene homopolymer, and/or propylene/alpha olefin copolymer. These films are often formed into pouches for holding food and they reduce the permeation of oxygen from the atmosphere in order to increase the food's shelf life.

US-7169453 describes a tank for holding fuel and other liquids; the tank walls include, successively: a first layer of high density polyethylene (HDPE), a layer of binder (i.e. an adhesive layer), a second layer of ethylene vinyl alcohol copolymer (EVOH) or of a mixture based on EVOH and a third layer of polyamide or of a mixture of polyamide and polyolefin. Such a multi-layer composition can be blow moulded to form plastic fuel cans; the multi-layer composition may typically be HDPE / tie layer / EVOH / tie layer / HDPE, where the tie layer is a material connecting together the layers on either side of it. The tank/can walls are 3 to 10 mm thick and it is intended that they are rigid.

US-6676780 describes a plastic film for insertion underneath a building to inhibit the migration of radon gas into the building. The film has an inner layer made of EVOH, polyvinylidene chloride, nylon, polyethylene terephthalate or polyvinyl alcohol sandwiched between outer layers of polyethylene, polypropylene or ethylene vinyl acetate. Adhesive is placed between the inner and outer layers. The inner layer of EVOH forms at least 5% of the thickness of the overall membrane. There is no teaching concerning a barrier that inhibits or prevents the migration of both polar and non-polar chemicals, especially liquids or hydrocarbons, across it.

DE-3514383 discloses a plastic waterproofing sheet for preventing water from waste tips from entering ground water. The sheet has (a) outer layers of any material that can be welded and has a high chemical resistance and a high resistance to weather, to ageing and to ultraviolet rays and also has a high tensile strength, e.g. polyethylene, and (b) an inner layer having a high vapour impermeability and mechanical properties matching the outer layers, e.g. a polyamide, polyester, polyvinyl fluoride, polyethylene terephthalate.

DE-19902102 discloses a lining material for covering walls, floors and ceilings, for example wallpaper, having a polar layer, e.g. a polyamide, and a non-polar layer, e.g. polyethylene. The layers are joined by a bonding material.

DE-20214762 discloses a symmetric plastic membrane for preventing diffusion of water vapour. The membrane has at least 2 layers having different water vapour permeability, for example one may be a polyolefin and the other a polyamide.

The prior art does not suggest or teach the use of a flexible membrane made of a polyolefin layer, a polyamide layer and EVOH.

### Disclosure of the Invention

According to one aspect of the present invention, there is provided a method of forming a barrier between a first area containing polar and/or non-polar chemicals and a second area, thereby preventing such chemicals from passing into the second area. According to a separate aspect, the present invention provides a flexible membrane configured to prevent the passage of polar and/or non-polar chemicals through it. It is an important aspect of the present invention that a single membrane can be used to prevent the passage of a wide spectrum of chemicals, including both polar and non-polar chemicals, so that a single membrane can be used when both polar and non-polar chemicals are present. Also, such a membrane can be used when only one type of chemical is present (e.g. only polar or only non-polar liquids) so that separate membranes need not be kept in stock for both purposes. Thus a single membrane is provided by the present invention that exhibits chemical resistance to a wider range of challenge chemicals in liquid-, dissolved- or vapour- form, including both polar and non-polar chemicals.

The chemical resistance of a polyolefin geomembrane, which is non-polar in nature (and so prevents the passage of polar liquids such as methanol) can be significantly increased by incorporating layers of polar polymers. The converse is also valid, i.e. the chemical resistance of a polar material, e.g. a polyamide, can be significantly increased by incorporating layers of non-polar polymers. An ethylene vinyl alcohol copolymer (EVOH) layer also provides a highly effective diffusion barrier to polar liquids in the membrane.

According to one embodiment of the present invention, the present invention provides a method of forming a barrier between a first area containing polar and/or non-polar chemicals, e.g. liquids, and a second area, thereby preventing such chemicals from passing into the second area. The method involves placing a barrier between the first and second areas that is in the form of a flexible multi-layer ground protection membrane. The membrane includes several layers that work together to provide the required barrier. These layers include the following layers that are bonded together:
a) at least one layer of a polyolefin, e.g. a high density polyethylene, or a polymer mixture including at least a majority by weight of a polyolefin; the polyolefin layer has a weight of at least 0.9 g/cm³, e.g. of at least 0.926 g/cm³
b) at least one layer formed of a polyamide or a polymer mixture including at least a majority of such polyamide; and
c) at least one further layer formed of ethylene vinyl alcohol copolymer or a mixture of polymer materials including at least a majority by weight of ethylene vinyl alcohol copolymer, this layer c) lies adjacent to polyamide layer b).

The present specification specifies certain polymers and it should be understood that such polymers may be provided as a mixture of such polymers. The term "mixture" or "polymer mixture" when referring to a particular polymer means that, in addition to polymerised monomer units of the specified polymer, polymerised monomer units of a different polymer may be present so long as the units of the specified polymer form the majority, by weight, of the total polymerised units present. The mixture or polymer mixture may be a block polymer, a graft polymer, a copolymer or indeed a physical blend between various polymers, i.e. a polymer alloy. The polyamide layer may be made from a polymer mixture formed from a blend of a crystalline polyamide and an amorphous polyamide.

The present invention also provides a membrane of the above formulation.

It is surprising that the layers in the membrane of the present invention cooperate with each other to provide an excellent barrier to a very wide spectrum of challenge chemicals in vapour, liquid or dissolved form, including both polar and non-polar chemicals and especially that such a barrier can be made sufficiently thin that it is flexible.

One advantage of the present invention is that the polyamide and the EVOH layers can be made very thin; these materials are relatively expensive compared to polyolefins, and so making a membrane in which the majority of the membrane thickness is formed by a polyolefin reduces the cost of the membrane.

The polyolefin layer a) is flexible and has a good chemical resistance to the passage of polar chemicals and in particular it has a good water/moisture resistance. It is also heat weldable to other polyolefin layers, which allows sheets of the present invention to be welded together to form larger sheets that maintain the integrity of the barrier where the sheets are joined. The polyolefin layer (layer a) may be formed from polyethylene or polypropylene, e.g. a high density polyethylene (HDPE), which has a density of at least 0.941g/cm³, or a medium density polyethylene (MDPE) having a density in the range of 0.926 - 0.940 g/cm³ or polypropylene (PP) with a density between 0.90 to 0.96g/cm³. High density polyethylene (HDPE) is the preferred material with an optimum density between 0.950 and 0.965g/cm³ and a melt flow index (MFI) of from 1 to 10. The polyolefin may contain cross-link bonds, e.g. PEX which is a medium- to high-density polyethylene containing cross-link bonds.

The polyolefin may be polymerised in the solution phase or may be formed by a Ziegler-Natta catalysed polymerisation process in the gas phase and may include copolymers of different olefins.

The polyamide layer b) is itself polar in nature and so provides a good barrier against non-polar chemicals, especially hydrocarbons. The polyamides (PA) used to provide layer(s) b) may be formed from aliphatic polyamides, aromatic polyamides and copolymers thereof, preferably with a density between 1.12 to 1.25, e.g. 1.13 to 1.20g/cm³, and a Melt Point Index (MPI) between 175°C and 300°C, for example nylon, e.g. nylon 6, nylon 6/6, nylon 6/10, nylon 6/12, amorphous nylon etc. It provides enhanced chemical resistance to the passage of polar chemicals. Therefore the membrane preferably has a polyamide on at least one side of the EVOH layer, and preferably either a pair of polyamide layers are provided that sandwich an EVOH layer between them or a pair of EHOH layers are provided that sandwich a polyamide layer between them.

The EVOH layer c) is a good barrier against non-polar chemicals, especially hydrocarbons; its denser crystalline molecular structure reduces permeation of many other polar chemicals. The EVOH may have a mole ethylene% of from 17% to 44%, typically between 32% and 38%, and polymers with a Melt Flow Index (MFI) of 2.0 to 5.0 are especially useful.

The membrane according to the present invention provides:
a) a wider chemical resistance spectrum since polyamide resists some chemicals that PE and EVOH do not and
b) improved barrier properties with lower permeation rates for a given membrane thickness
c) the above properties such that the membrane can be relatively thin and so is flexible.

At the interface between adjacent layers in the membrane, a permeant (i.e. a material permeating the membrane) will generally partition in favour of one side or the other. A permeant that is soluble in polyethylene is unlikely to be soluble in polyamide and so will partition strongly into the PE layer and therefore there will be a low concentration in the polyamide and so there will be a low driving force for permeation through the membrane as a whole. A similar consideration applies to a polyethylene:EVOH interface. In each case, however, some molecules will partition relatively well into either the PA or the EVOH. However, EVOH and PA have very different solubility characteristics, so partition at the PA:EVOH barrier adds a further substantial block to permeation of the membrane, despite them being both polar materials, and can provide a reduction of 2 orders of magnitude in permeation.

The benefit of the invention can be demonstrated by comparing the permeation rate of non-polar hydrocarbon chemicals through membranes of the same overall thickness (450 microns)

| Soil Concentration | Permeation Rates (mg/m²/year) | |
|---|---|---|
| 250 mg/kg | HDPE | PE/PA/EVOH/PA/PE |
| Benzene | 4.74x10³ | 3.52 x 10⁻⁴ |
| Toluene | 3.36 x 10³ | 1.14 x 10⁻³ |
| Ethyl Benzene | 2.54 x 10³ | 1.18 x 10⁻⁴ |
| Xylene | 2.10 x 10³ | 6.09 x 10⁻³ |

The membrane may be symmetrical in its composition so that it can be placed in either orientation to form the barrier between the first and second areas, that is to say it does not matter which face of the membrane is in contact with the first area and which face is in contact with the second area. In such a symmetrical membrane, a pair of high-density polyethylene layers (layers a)) preferably sandwich between them the polyamide layer (layer b)) and the ethylene vinyl alcohol copolymer (layer c)). Likewise, as mentioned above, the EVOH layer is preferably sandwiched between a pair of polyamide layers to prevent moisture from reaching it. The provision of the polyolefin layers on the outside of the sheet, i.e. either side of the core polyamide/EVOH layers, enables the membrane to be welded on both sides.

As well as providing an effective barrier preventing the passage of both polar and non-polar liquids, an important aspect of the present invention is to minimise the cost of such a barrier. We have found that the chemical barrier properties, characterised by lower permeation rates, of the polyamide/EVOH layers are significantly increased in the membrane of the present invention as compared to a membrane of compatible thickness in a monopolymer membrane. Therefore the thicknesses of the polyamide and the EVOH layers can be reduced to very low thicknesses and still provide a highly effective barrier to non-polar liquids, such as hydrocarbons. Since polyamide and EVOH polymers are generally substantially more expensive than the polyolefin material, a membrane in which the majority by weight is formed by the polyolefin layer(s) and thin polyamide/EVOH layers are provided represents a very cost effective membrane that is impermeable to both polar and non-polar liquids. In particular, the composite membrane of the present invention can be cheaper than a mono-polymer membrane against the migration of non-polar liquids for the same performance because the layers that block the non-polar liquids in the present membrane can be thinner than the mono-polymer membrane.

The thicknesses of the various layers may be:
i) the thickness of high density polyethylene layer a) may be 100 to 1490µm, e.g. 300 to 600µm, such as 350 to 500µm;
ii) the thickness of the polyamide layer b) may be 5 to 15µm, e.g. 8 to 12µm and
iii) the thickness of the EVOH layer c)may be 5 to 15µm, e.g. 8 to 12µm,
If the membrane should contain more than one layer a), b) and/or c), the aggregate thicknesses of the layers of each type should fall in the above ranges.

The preferred thickness of the composite membrane (essentially layers a) to c)) and any tie layers bonding them together) is at least 350µm and will generally be less than 1500µm; optionally the thickness lies in the range of 350 to 600µm, e.g. 400 - 500pm such as 400 - 450pm. In terms of the overall thickness of the membrane, the polyamide layer b) and the EVOH layer a) may each form up to 4.5%, for example 1.5 to 4.5%, or up to 3%, e.g. 2 to 3%, while the (high density) polyethylene layer b) may form 80 to 98.5%, e.g. 85 to 95%. If more than one layer of any one type a) to c) is present, the aggregate thickness of the layers of the same type preferably fall in the above percentage ranges.

The membrane may have a weight within the range of 100 grams per square metre (gsm) to 1500 gsm and may be supplied in rolls, e.g. from 1500 mm width upwards.

The polyamide/EVOH barrier layers are protected from damage and being broken by being bonded to the polyolefin layer(s), thereby protecting the integrity of the core layer(s); this is particularly important when the thicknesses of these core layers is reduced as discussed above. This protection is provided even when the membrane includes a polyolefin layer on only one side of the polyamide/EVOH barrier layers, but it is substantially improved when the membrane includes a pair of polyolefin layers sandwiching the polyamide/EVOH barrier layers between them.

Although the membrane of the invention can be produced by laminating individual layers together using adhesive, adhesives can dissolve when exposed to aggressive chemicals, leading to delamination of the membrane. For this reason and for reasons of cost, it is preferred to make the membrane by known co-extrusion methods, which produce the multilayer membrane in one pass and at least some of the layers are chemically bonded to each other. A co-extrusion manufacturing process provides a low cost method of producing a composite multi-layer membrane. Co-extrusion also enables thinner barrier layers to be produced with associated cost benefits. Co-extrusion processes are well known in the art and the skilled person will have no difficulty in extruding a multi-layer membrane in accordance with the present invention using such processes. Accordingly, they will not be described in detail herein.

Where two adjacent layers do not naturally adhere to each other during manufacture of the ground protection membrane, they may be bonded to each other by placing an adhesive tie layer between them. Such a tie layer is generally necessary:
between the polyolefin layer a) and the polyamide layer b) and
between the polyolefin layer a) and the ethylene vinyl alcohol layer c)
when these layers are adjacent to each other. Tie layers are well known in the art and for example may be an olefin polymer blend, such as an anhydride-modified polyolefin.

According to one embodiment, there is provided a symmetrical multi-layer composite membrane comprising the following layers:
a polyolefin, e.g. HDPE (high density polyethylene)
tie layer or adhesive to bond the HDPE layer to the PA layer
PA (polyamide)
EVOH (ethylene vinyl alcohol)
PA (polyamide),
tie layer
a polyolefin, e.g. HDPE
   or
a polyolefin, e.g. HDPE (high density polyethylene)
tie layer or adhesive to bond the HDPE layer to the EVOH layer
EVOH (ethylene vinyl alcohol)
PA (polyamide),
EVOH (ethylene vinyl alcohol)
tie layer
a polyolefin, e.g. HDPE

The membrane may incorporate one or more reinforcement layers on either or both surfaces or encapsulated within the membrane, e.g. between the polyolefin layer b) and the polyamide layer a). Typically such reinforcements could be, for example woven scrims or extruded grids or non-woven materials, e.g. a nylon mesh. Such layers increase the tensile strength of the membrane and prevent tearing of the membrane. Such reinforcement layers, because they generally are themselves porous and do not form a continuous film, often do not significantly affect the permeability properties of the overall membrane. Such reinforcements may also provide an uneven surface finish to improve slip resistance.

A protective layer may also be included in the ground protection membrane on one or both sides. Typically such protective layers could be made of non-woven or woven materials such as needle-punched non-woven or foam cushioning or woven tape materials. This may be adhered to the membrane, e.g. by butyl- or acrylic-based adhesives. Where a protective layer is incorporated, it may cover the whole width or stop short of the edge in order to provide an uncovered edge strip for jointing one sheet of membrane to another or to itself. The joint is preferably such that a seal is formed between the sheets that prevents or substantially hinders the migration of the materials that the membrane is isolating. Such a joint/seal could be formed by adhesive or thermal bonding/welding techniques; welding is made possible when the outer layer(s) of the membrane are formed by the polyolefin layer a). If welding is not used, the membrane may incorporate one or more integral strips of adhesive to facilitate joining/sealing, e.g. butyl or acrylic based adhesive materials. A protective layer may be provided in order to protect the membrane from being penetrated by sharp objects, for example stones, and generally will not form a continuous film that contributes to the porosity of the overall membrane. Such protective layers may also provide an uneven surface finish to improve slip resistance.

An adhesive layer may also be included on one or both sides of the membrane to enable the membrane to be adhered to concrete and other structures. The adhesive may cover the entire width of the roll or most of the width to provide an uncovered strip which can be used as an overlap to cover the joints between adjoining rolls. The adhesive layer is usually covered with a release paper. These products are often referred to as tanking membranes.

A geocuspate may also be included on one or both sides of the membrane to provide drainage for gases, vapours and liquids. The membrane may be bonded to the geocuspate with adhesive. A porous non-woven filter fabric may be bonded to the opposite surface or encapsulate both the membrane and geocuspate. These composite structures are used to collect and convey gases, vapours and liquids to protect underground structures. As with the reinforcement layer and the protective layer, the geocuspate layer and/or the porous non-woven filter fabric may extend over the whole width of the membrane or over only part of its width, thereby allowing adjacent sheets of membrane to be bonded together by welding or adhesive; in the latter case, adhesive may be incorporated into the edge strip of the membrane that remains uncovered by the geocuspate and the porous non-woven filter fabric.

The membrane according to the present invention can be used in the following applications, although there will be other uses for the membrane that are not listed:
Agriculture: Agricultural waste, slurry lagoons, biogas production tanks
Construction: Brown-field developments on contaminated land, basement linings, building foundations, land reclamation, tanking, tunnel linings, underground structures
Environmental protection: Bioremediation, containment, contaminated land remediation, contaminated soil treatment areas, groundwater protection, remediation membrane
**Industrial:** Secondary containment liners & basins, retention ponds, sludge desiccation basins
**Mining:** Evaporation and brine basins, leachate pond liners, mining heap leach pads
**Waste:** Landfill containment and capping, transfer stations, waste disposal & storage sites (liquid & solid waste)
**Water & Water Treatment:** Canals & dikes, dams, effluent treatment, fluid barrier, reed beds, reservoir and potable water lining, water storage & treatment

One particular use of the membrane is as a Damp Proof Course (DPC); in such a use, at least part of the membrane is embossed to form a strip that has a rough or textured finish. The strip section is installed in a wall, especially a cavity wall (e.g. having an outside formed of bricks, an inside formed by cement blocks inside and an air-gap between them) and unless the membrane is embossed where it sits in the mortar, a slip plane can be formed that could cause the wall to shift. The remainder of the membrane may be smooth, which allows it to project inside the building and be welded to further membrane. The width of the embossed strip will depend on the width of the wall and the width of the unembossed strip should be chosen to allow it to be easily welded to another membrane sheet; in one embodiment, the width of the sheet is 600mm with the embossed strip being 450mm wide leaving the other 150mm edge smooth. This membrane may be used as a gas barrier in the foundations of a building.

Thus the membrane according to the present invention may include a strip that is textured, e.g. embossed, to allow mortar to key into it.

### Examples of the Present Invention

### Example 1

A symmetrical membrane is a multi-layer composite comprising the following polymers formed by the following layers:

**Table 1**

| **Layer** | **Composition and thickness** |
|---|---|
| A - Outer | 210 µm Polyolefin, especially HDPE |
| B - Tie layer | 7.5 µm |
| D - Middle | 5.0 µm PA |
| C- Core | 10.0 µm EVOH |
| D - Middle | 5.0 µm PA |
| B - Tie layer | 7.5 µm |
| A - Inner | 205 µm Polyolefin, especially HDPE |

| | |
|---|---|
| **Total (membrane) thickness 450 µm** | |

### Example 2

An asymmetrical membrane is a multi-layer composite comprising layers formed from the following polymers, the materials being used are as described in Example 1:
HDPE
tie layer
PA
EVOH
tie layer
HDPE

### Example 3

A symmetrical multi-layer composite membrane comprising layers formed by the following polymers, the materials being used are as described in Example 1:
HDPE
tie layer
EVOH
PA
EVOH
tie layer
HDPE

The membranes of Examples 1 - 3 are made by co-extrusion using techniques that are so well-known in the art that further description is not necessary.

### Test 1

The membrane of Example 1 was exposed to various challenge liquids and tested in accordance with standard ATSM D5322 Laboratory Immersion Procedures for Evaluating the Chemical Resistance of Geosynthetics to Liquids

In accordance with ASTM D5322/EN 14414, the membrane of Example 1 was immersed in each challenge chemical set out in Table 2 for 56 days at 50°C and at the end of that time it is taken out of the bath and examined for any attack on the exposed surfaces. Also, the weight and thickness changes were measured and compared with those of the original membrane. Finally, the changes in the tensile strength (in both the direction of polymer orientation (MD) and transverse to the polymer orientation (XD)) following immersion were tested and the results were measured. The changes in thickness, weight and tensile strength and the results of the visual inspection before and after immersion are set out in Table 2.

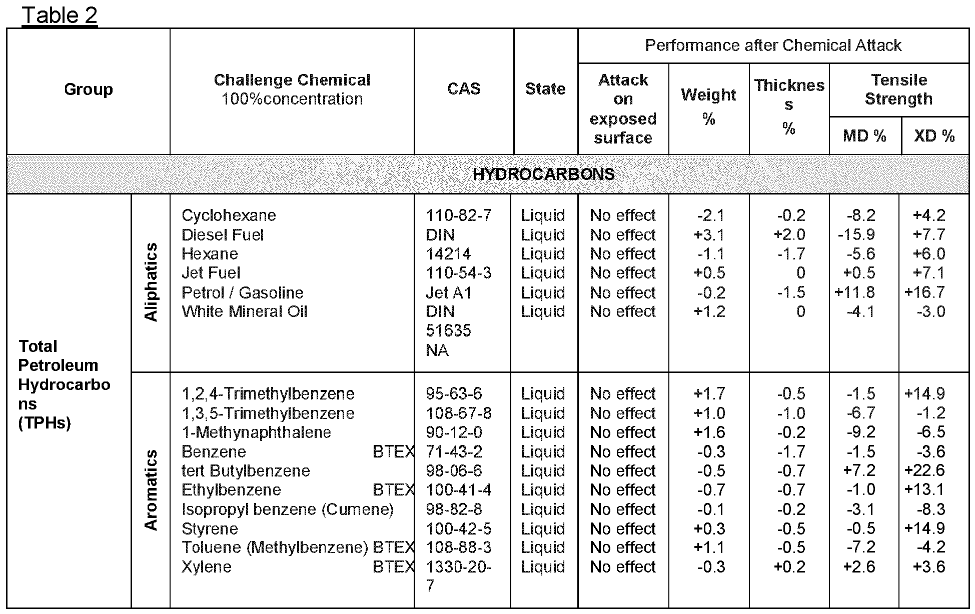

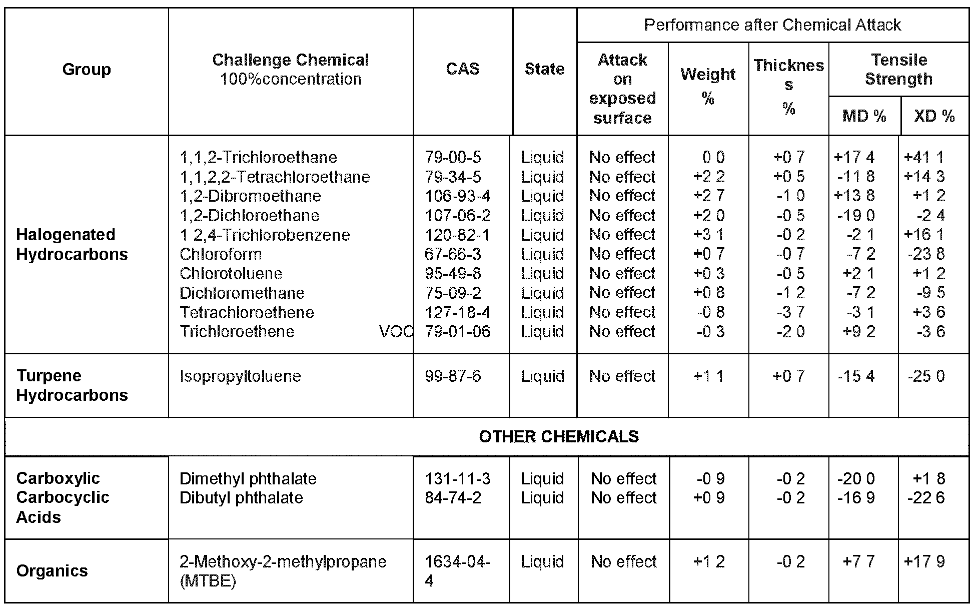

As can be seen, the membrane provides excellent resistance to a broad range of attack chemicals.

### Test 2

Basic permeation data were obtained using standard gravimetric techniques. A known weight of polymer was fully immersed in a test solvent and at regular intervals the sample was removed from the solvent, excess solvent removed, sample weighed then re-immersed in the test solvent. At equilibrium, the saturated solubility of the solvent in the polymer is known and the diffusion coefficients obtained by fitting to a standard Fickian diffusion modeller which takes into account the fact that the diffusion coefficients are concentration dependent. The methodology for determining the diffusion coefficients from the data is described in, e.g. Hansen, C. M., "The significance of the surface condition in solutions to the diffusion equation: Explaining "anomalous" sigmoidal, Case II, and Super Case II absorption behaviour, European Polymer Journal 46 (2010) 651-662."

| **Group** | | **Challenge Chemical** | **CAS** | **Permeation Rate mg/m²/year** |
|---|---|---|---|---|
| | | 100%concentration | | |
| **Total Petroleum** | **Aliphatics** | Cyclohexane | 110-82-7 | 5 52E-02 |
| **Hydrocarbons** | | Hexane | 110-54-3 | 1 56E-02 |
| **(TPHs)** | | White Mineral Oil | NA | 1 34E+01 |

| 100% concentration | | | | |
|---|---|---|---|---|
| | **Aromatics** | 1,2,4-Trimethylbenzene | 95-63-6 | 3 25E-01 |
| | | 1-Methynaphthalene | 90-12-0 | 1 51 E+02 |
| | | Benzene | 71-43-2 | 3 52E+00 |
| | | Ethylbenzene | 100-41-4 | 1 18E+00 |
| | | Isopropyl benzene (Cumene) | 98-82-8 | 5 64E-01 |
| | | Toluene (Methylbenzene) | 108-88-3 | 1 14E+01 |
| | | Xylene | 1330-20-7 | 6 09E+01 |
| **Halogenated Hydrocarbons** | | 1,1,2-Trichloroethane | 79-00-5 | 3 02E+06 |
| | | 1,2-Dibromoethane | 106-93-4 | 1 04E+07 |
| | | 1,2,4-Trichlorobenzene | 120-82-1 | 6 82E+01 |
| | | Chlorotoluene | 95-49-8 | 7 19E+01 |
| | | Dichloromethane | 75-09-2 | 1 87E+07 |
| | | Tetrachloroethene | 127-18-4 | 1 95E+00 |
| | | Trichloroethene | 79-01-06 | 9 25E+04 |
| **Turpene Hydrocarbons** | | Isopropyltoluene | 99-87-6 | 1 55E+01 |
| **Carboxylic Carbocyclic Acids** | | Dimethyl phthalate | 131-11-3 | 8 30E+03 |
| | | Dibutyl phthalate | 84-74-2 | 2 54E+03 |
| **Organics** | | 2-Methoxy-2-methylpropane (MTBE) | 1634-04-4 | 1 45E+04 |

## Claims

1. A flexible multi-layer ground membrane configured to prevent polar and/or non-polar chemicals, especially liquids, from passing through it, e.g. either into the ground or out of the ground, wherein the membrane comprises:
a) at least one layer of a polyolefin, e.g. a polyethylene, or a mixture including at least a majority by weight of polyethylene with a density greater than 0.9g/cm³, e.g. greater than 0.926 g/cm³;
b) at least one layer formed of one or more polyamides or a mixture including at least a majority of such polyamide(s);and
c) at least one further layer formed of ethylene vinyl alcohol copolymer or a polymer including at least a majority by weight of ethylene vinyl alcohol copolymer.

2. A membrane as claimed in claim 1, wherein the thickness of:
polyolefin layer a) is 300 to 1500µm, for example 300 to 600µm, e.g. 350 to 500µm, or if more than one such layer is present, the aggregate thickness of such layers is in the above ranges and/or
polyamide layer b) is 5 to 15µm, e.g. 8 to 12µm, or if more than one such layer is present, the aggregate thickness of such layers is 5 to 15µm, e.g. 8 to 12µm and/or ethylene vinyl alcohol copolymer layer c) is 5 to 15µm, e.g. 8 to 12µm, or if more than one such layer is present, the aggregate thickness of such layers is 5 to 15µm, e.g. 8 to 12µm.

3. A membrane as claimed in any preceding claim, wherein said at least one polyolefin layer (a) comprises a pair of such layers a) sandwiching between them said layers b) and c).

4. A membrane as claimed in any preceding claim, wherein a polyolefin layer a) lies next to a polyamide layer b) and wherein the membrane includes an adhesive tie layer between them that bonds the two layers together.

5. A membrane as claimed in any one of claims 1 to 3, wherein a polyolefin layer a) lies next to an ethylene vinyl alcohol layer c) and wherein the membrane includes an adhesive tie layer between them that bonds the two layers together.

6. A membrane as claimed in any one of claims 1 to 3, comprising the following layers bonded together:
a polyolefin, e.g. HDPE (high density polyethylene)
tie layer or adhesive to bond the HDPE layer to the PA layer
PA (polyamide)
EVOH (ethylene vinyl alcohol)
PA (polyamide),
tie layer and
a polyolefin, e.g. HDPE;
or the following layers bonded together:
a polyolefin, e.g. HDPE (high density polyethylene)
tie layer or adhesive to bond the HDPE layer to the PA layer
EVOH (ethylene vinyl alcohol)
PA (polyamide),
EVOH (ethylene vinyl alcohol)
tie layer and
a polyolefin, e.g. HDPE.

7. A membrane as claimed in any preceding claim, wherein at least one reinforcement layers is provided that lies against one or both sides of the membrane, and optionally is affixed to the membrane, or is encapsulated within the membrane.

8. A membrane as claimed in any preceding claim, which includes at least one protective layer on one or both sides of the membrane, which protective layer is optionally affixed to the membrane
and optionally wherein the protective layer covers the whole width of the membrane or wherein the protective layer covers the whole width of the membrane except for an edge strip and the membrane optionally then includes one or more regions of adhesive in said edge strip.

9. A membrane as claimed in any preceding claim, wherein the membrane includes a geocuspate material affixed to at least one side of the membrane and optionally a porous geotextile affixed to the other side of the membrane,
and optionally wherein the geocuspate and/or the porous geotextile covers the whole width of the membrane or wherein at least one of the geocuspate layer the geotextile covers the whole width of the membrane except for an edge strip and the membrane optionally then includes one or more regions of adhesive in said edge strip.

10. A membrane as claimed in any preceding claim, which has a weight within the range of 100 grams per square metre (gsm) to 1500 gsm.

11. A membrane as claimed in any preceding claim, wherein the membrane has a thickness of at least 100µm, e.g. at least 350µm and optionally the thickness lies in the range of 350 to 1500µm, e.g. 350 to 600µm.

12. A membrane as claimed in any preceding claim, wherein:
polyolefin layer a) forms 80 to 98.5%, e.g. 85 to 95%, of the thickness of the membrane or if more than one such layer is present, the aggregate thickness of the such layers form 80 to 98.5%, e.g. 85 to 95%, of the thickness of the membrane, and/or
polyamide layer b) forms up to 4.5%, for example 1.5 to 4.5%, or up to 3%, e.g. 2 to 3%, of the thickness of the membrane, or if more than one such layer is present, the aggregate thickness of such layers fall in the above percentage ranges and/or ethylene vinyl alcohol copolymer layer c) forms up to 4.5%, for example 1.5 to 4.5%, or up to 3%, e.g. 2 to 3%, of the thickness of the membrane or if more than one such layer is present, the aggregate thickness of such layers fall in the above percentage ranges.

13. A membrane as claimed in any preceding claim, wherein the membrane includes an adhesive layer on one or both of its sides that covers the entire width of the membrane or only part of the width to allow the membrane to be adhered to a structure, e.g. a concrete structure, which adhesive layer is optionally covered with a release paper.

14. A membrane as claimed in any preceding claim, wherein the membrane includes an embossed region that is configured to extend through a cavity wall and span the cavity within the wall and wherein the membrane includes a region that is configured to extend beyond the wall to enable a further membrane to be joined to it, e.g. by welding.

15. A method of forming a barrier between a first area containing polar and/or non-polar chemicals, e.g. polar and/or non-polar liquids, and a second area, thereby preventing such chemicals from passing into the second area, which method comprises:
forming the barrier of a flexible multi-layer ground membrane that comprises the following layers that are bonded together:
a) at least one layer of a polyolefin, e.g. a high density polyethylene, or a mixture including at least a majority by weight of polyolefin with a density greater than 0.9g/cm³, e.g. greater than 0.926 g/cm³
b) at least one layer formed of one or more polyamides or a mixture including at least a majority of such polyamide(s); and
c) at least one further layer formed of ethylene vinyl alcohol copolymer or a polymer including at least a majority by weight of ethylene vinyl alcohol copolymer, said layer c) optionally lying adjacent to polyamide layer b).
which membrane is optionally as claimed in any preceding claim.
